# EUROPÄISCHE PATENTSCHRIFT

(11) **EP 0 755 341 B1**
(45) Veröffentlichungstag und Bekanntmachung des Hinweises auf die Patenterteilung: **22.09.1999**
(21) Anmeldenummer: 95918614.9
(22) Anmeldetag: 26.04.1995
(51) Int. Cl.: B60S 1/52

(54) **WISCHARM, INSBESONDERE FÜR KRAFTFAHRZEUGE**
WIPER ARM, IN PARTICULAR FOR MOTOR VEHICLES
BRAS D'ESSUIE- GLACE, EN PARTICULIER POUR VEHICULES AUTOMOBILES

(30) Priorität: 29.04.1994 DE 4415081
(43) Veröffentlichungstag der Anmeldung: 29.01.1997
(73) Patentinhaber: ITT Automotive Europe GmbH, 60488 Frankfurt am Main (DE)
(72) Erfinder: EDELE, Reinhard, D-74321 Bietigheim-Bissingen (DE); KRIZEK, Oldrich, D-74321 Bietigheim-Bissingen (DE)
(74) Vertreter: Dreiss, Fuhlendorf, Steimle & Becker
(86) Internationale Anmeldenummer: EP9501589
(87) Internationale Veröffentlichungsnummer: WO9529827

(56) Entgegenhaltungen:
- EP-A- 0 532 417
- DE-A- 2 942 086
- DE-A- 3 740 639
- GB-A- 2 151 465

## Beschreibung

Die Erfindung bezieht sich auf einen Wischarm, insbesondere für Kraftfahrzeuge, mit den Merkmalen des Oberbegriffs des Anspruchs 1.

Ein solcher Wischarm ist bereits aus der DE-A-29 42 086 bekannt. Dieser Wischarm besitzt eine Wischstange, an deren freiem Ende ein Wischblatt befestigbar ist. Ein auf der Wischstange angeordnetes Formstück aus weichelastischem Kunststoffmaterial weist einen Aufnahmekanal für die Wischstange und eine parallel zur Wischstange verlaufende Bohrung als Waschflüssigkeitsleitung auf. Das Formstück ist längs des Aufnahmekanales geschlitzt und auf die Wischstange aufgeklipst.

Nachteilig an diesem Wischarm ist, daß die Befestigung des Formstückes durch Aufklipsen auf die Wischstange nicht ausreichend sicher ist.

Die Aufgabe der Erfindung besteht darin, eine einstückige Einheit aus weichelastischem Kunststoff, welche einen oder mehrere Flüssigkeitskanäle und einen Kanal mit entsprechendem Querschnitt zur Aufnahme der Wischstange aufweist, sicher an der Wischstange zu halten.

Erfindungsgemäß wird die Aufgabe durch einen Wischarm mit den Merkmalen des Anspruchs 1 gelöst.

Dadurch, daß gemäß Anspruch 1 eine Wand des Kanales mit entsprechendem Querschnitt zur Aufnahme der Wischstange über die gesamte Länge der Einheit geteilt ist, die gegenüberliegenden Teile dieser Wand als Verschluß in der Art von gegenseitig in Eingriff bringbaren Querschnittsformen ausgebildet und die Querschnitte der gegenüberliegenden Teile der Wand als formschlüssig ineinandergreifende Haken ausgebildet sind, ist eine sichere Befestigung dieser Einheit auf der Wischstange gewährleistet.

Bei der Montage an die Wischstange ist die Einheit aus Umhüllung und Schlauch äußerst einfach zu handhaben, da es sich nur um ein einziges Bauteil handelt. Die geteilte Wand der Einheit wird entgegen einer elastischen Vorspannung soweit aufgespreizt, daß die Einheit quer zu ihrer Längserstreckung auf die Wischstange aufgeschoben werden kann. Auf Grund des verwendeten weichelastischen Materials kann dieses Aufspreizen und Aufschieben der Einheit auf die Wischstange auch in Längsrichtung örtlich fortschreitend vorgenommen werden, wobei die Einheit vorteilhafterweise auch Biegungen der Wischstange folgen kann ohne in den Bogenbereichen Falten zu bilden. Nach dem Schließen des Verschlusses, was ebenfalls in Längsrichtung örtlich fortlaufend erfolgen kann, ist die Einheit sicher an der Wischstange gehalten und bildet eine sowohl schützende als auch ästhetische Umhüllung der Wischstange. Jeweils ein Ende eines Flüssigkeitskanales ist noch mit einem Anschlußschlauch und mit einem Anschlußstutzen einer Waschdüse bzw. mit einer Anschlußleitung zur Waschdüse zu verbinden. Die hierzu erforderlichen Mittel und Maßnahmen sind hinreichend bekannt und bedürfen keiner näheren Erläuterung.

Vorteilhafte Ausgestaltungen der Erfindung sind in den Unteransprüchen angegeben.

So ist es zum Beispiel vorteilhaft, wenn gemäß Anspruch 2 die Einheit aus Umhüllung und Schlauch als kompaktes Bauteil mit aerodynamisch und/oder ästhetisch günstiger Form, vor allem in Bezug auf die Querschnittsform, gestaltet ist und sich möglichst über die gesamte Länge der freiliegenden Wischstange erstreckt. Eine aerodynamische und/oder ästhetische günstige Form wird erreicht durch möglichst glatte und nicht zerklüftete Außenflächen, die entsprechend den Strömungsverhältnissen geneigt angeordnet sind und harmonische Übergänge von einer Außenfläche zur anderen besitzen.

Insbesondere für einen Wischarm mit im Querschnitt annähernd rechteckiger Wischstange wird eine Ausgestaltung nach Anspruch 3 empfohlen, bei welcher sich der Verschluß des Kanales, der die Wischstange aufnimmt, längs einer Schmalseite der Wischstange erstreckt. Das hat den Vorteil, daß der Verschluß bei in Parkstellung befindlichem Wischarm an der Unterseite angeordnet sein kann und somit nicht unmittelbar im Blickfeld eines Betrachters liegt.

Eine alternative Möglichkeit für die Ausbildung des Verschlusses ergibt sich aus dem Anspruch 4. Der eine für den Verschluß ausgebildete Teil der Wand des Kanales für die Aufnahme der Wischstange ist im Querschnitt U-förmig gestaltet, wobei die Öffnung des U-förmigen Querschnittes auf die Schmalseite der Wischstange gerichtet ist. Im Bereich des Verbindungssteges des U-förmigen Querschnitts steht der Teil der Wand nach außen ab. Der freie Schenkel des U-förmigen Querschnitts greift hakenartig in eine Nut in dem gegenüberliegenden Teil der Wand des Kanales für die Aufnahme der Wischstange ein, der als korrespondierender Teil für den Verschluß ausgebildet ist, und bildet so die formschlüssige Verbindung, welche den Verschluß bildet.

Bei einem Wischarm mit gebogener Wischstange entstehen Spannungszustände in bestimmten Bereichen der Einheit aus Umhüllung und Schlauch, die einen noch sichereren Verschluß des Kanales erforderlich machen. Das ist mit einer Ausgestaltung gemäß Anspruch 5 zu erreichen, wonach an den einen Teil der geteilten Wand, vorzugsweise auf deren gesamter Länge, eine Rastleiste angeformt und an den anderen Teil der geteilten Wand eine zugehörige Rastnut eingeformt ist. Die eigentliche Rastleiste ist dabei vorteilhafterweise über einen schmalen Steg, der von dem Teil der geteilten Wand absteht, einstückig an diese angeformt bzw. einstückig mit der gesamten Einheit hergestellt. Die Rastleiste und die Rastnut sollten dabei vorzugsweise eine herzähnliche Querschnittsform besitzen. Diese Querschnittsform ermöglicht zum einen ein einfaches Einrasten des Raststeges mit der Querschnittsspitze voran. Andererseits ist auch unter Spannungszuständen ein ausreichend sicherer Verschluß gewährleistet.

Vorteilhaft kann es sein, insbesondere bei einer Ausgestaltung des Verschlusses, wenn gemäß Anspruch 6 zumindest eines der beiden Teile der geteilten Wand mit einer Vorspannung in Richtung des gegenseitigen Eingriffs der den Verschluß bildenden Querschnittsformen versehen ist. Damit wird die Sicherheit der formschlüssigen Verbindung der beiden Teile der geteilten Wand erhöht. um außerdem die Beweglichkeit zumindest eines Teiles einer Wand für das Öffnen der Wand zum Zweck der Monate der Einheit auf der Wischstange zu verbessern, empfiehlt sich, daß gemäß Anspruch 7 der Querschnitt der Wand örtlich durch mindestens eine in Längsrichtung der Einheit verlaufende Nut oder Rille verringert ist. Diese Wirkung kann noch verstärkt werden, wenn mehrere derartige Nuten oder Rillen zueinander versetzt oder direkt gegenüberliegend in die Wand eingebracht sind.

Besonders kostengünstig ist die Einheit aus Umhüllung und Schlauch, wenn diese gemäß Anspruch 8 durch Extrudieren hergestellt ist. Die Einheit kann in diesem Fall auf die jeweils erforderliche oder gewünschte Länge geschnitten und dann auf der Wischstange montiert werden.

Nachfolgend wir die Erfindung in Ausführungsbeispielen an Hand von Zeichnungen näher beschrieben. In den Zeichnungen zeigen:
- Fig. 1: einen erfindungsgemäßen Wischarm für ein Kraftfahrzeug (Schnittdarstellung),
- Fig. 2: den vorderen Teil des Wischarmes als Ansicht in Richtung des Pfeiles A in Fig. 1,
- Fig. 3: den Querschnitt III - III durch den erfindungsgemäßen Wischarm in Figur 1,
- Fig. 4: einen Querschnitt durch einen anderen erfindungsgemäßen Wischarm im Bereich der Wischstange,
- Fig. 5 -: einen Ausschnitt des Querschnittes eines anderen erfindungsgemäßen Wischarmes im Bereich der Wischstange,
- Fig. 6 -: einen Querschnitt einer Einheit aus Umhüllung und Schlauch mit offenem Verschluß und
- Fig. 7 -: einen Querschnitt durch einen erfindungsgemäßen Wischarm mit montierter Einheit gemäß Figur 6 im Querschnitt.

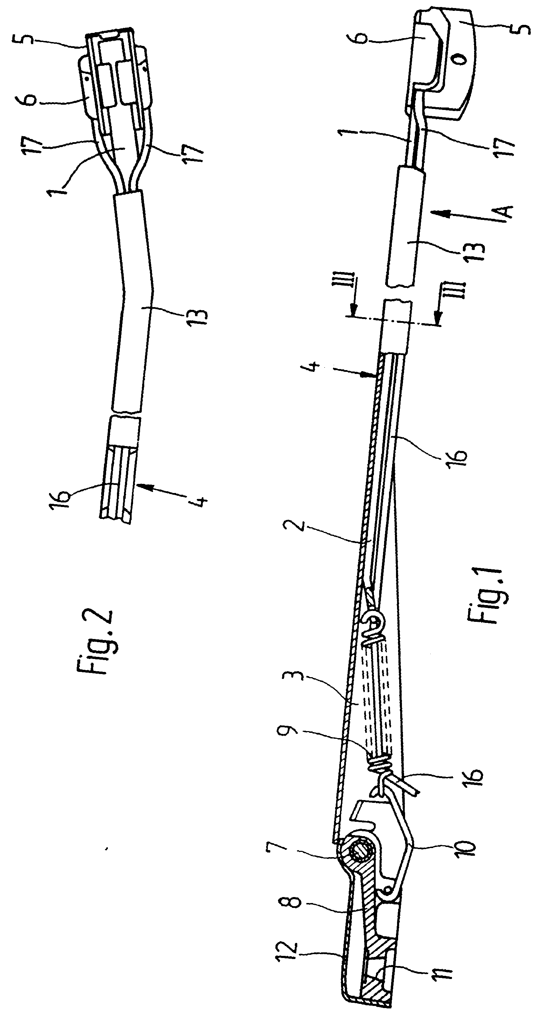

Der in Figur 1 gezeigte Wischarm für ein Kraftfahrzeug besitzt eine im Querschnitt etwa rechteckförmige, aus Federbandstahl bestehende Wischstange 1, die mit einem Ende 2 innerhalb eines im Querschnitt im wesentlichen U-förmigen Gelenkteiles 3 angeordnet und an diesem befestigt ist. Zur Befestigung der Wischstange 1 sind die Wandungen des Gelenkteiles 3 in dem vorderen Bereich 4 auf der Wischstange 1 verkrimpt. Am freien Ende der Wischstange 1 ist ein Verbindungsstück 5 zum Anlenken eines nicht dargestellten Wischblattes angebracht, welches mit einem mehrdüsigen Waschdüsenkörper 6 bestückt ist. Das Gelenkteil 3 ist über eine Schwenkachse 7 schwenkbar mit einem Befestigungsteil 8 verbunden, und eine im Freiraum des Gelenkteiles angeordnete Anpreßfeder 9 ist mit einem Ende am Ende 2 der Wischstange 1 und mit ihrem anderen Ende über einen C-förmigen Haken 10 mit dem Befestigungsteil 8 verbunden. Diese Anpreßfeder 9 sorgt in bekannter Weise für das Andrücken der Wischleiste auf die zu reinigende Fahrzeugscheibe. Das Befestigungsteil 8 besitzt eine konische Öffnung 11 für die Befestigung des Wischarmes auf einer nicht dargestellten Antriebswelle. Insgesamt ist das Befestigungsteil 8 von einer um die Schwenkachse 7 schwenkbaren Abdeckkappe 12 überdeckt.

Wie insbesondere zusätzlich aus Figur 2 ersichtlich, ist auf den Teil der Wischstange 1, der sich außerhalb des Gelenkteiles 3 befindet, eine Einheit 13, bestehend aus Umhüllung 14 für die Wischstange 1 und Schlauch 15 für den Transport von Waschflüssigkeit, montiert. Diese Einheit 13 erstreckt sich über den größten Teil der Länge der Wischstange 1 zwischen dem Gelenkteil 3 und dem Verbindungsstück 5, wobei sie sich unmittelbar an das vordere Ende des Gelenkteiles 3 anschließt.

Aus den Figuren 1 und 2 ist außerdem ersichtlich, daß ein Zuführungsschlauch 16 mit zwei Kanälen, der an der Unterseite des Gelenkteiles 3 und der sich im Gelenkteil 3 befindlichen Wischstange 1 verlegt ist, an die Einheit 13 angeschlossen ist. An das vordere Ende der Einheit 13 ist der Waschdüsenkörper 6 direkt mittels zwei entsprechend geformten Anschlußröhrchen 17 angeschlossen. Wenn diese Anschlußröhrchen 17 einstückiger Bestandteil des Waschdüsenkörpers 6 sind, vereinfacht sich der Anschluß des Waschdüsenkörpers 6 an die Einheit 13. Da die Einheit 13 zwei Flüssigkeitskanäle 18 und der Zuführungsschlauch 16 als Doppelschlauch ausgebildet ist und der Waschdüsenkörper 6 längs getrennt ist und für jeden Teil ein separates Anschlußröhrchen 17 besitzt, ist es möglich, entsprechend gesteuert immer nur einen Flüssigkeitskanal 18 zu beaufschlagen und dadurch nur in Bewegungsrichtung des Wischblattes die Fahrzeugscheibe vor dem Wischblatt zu bespritzen.

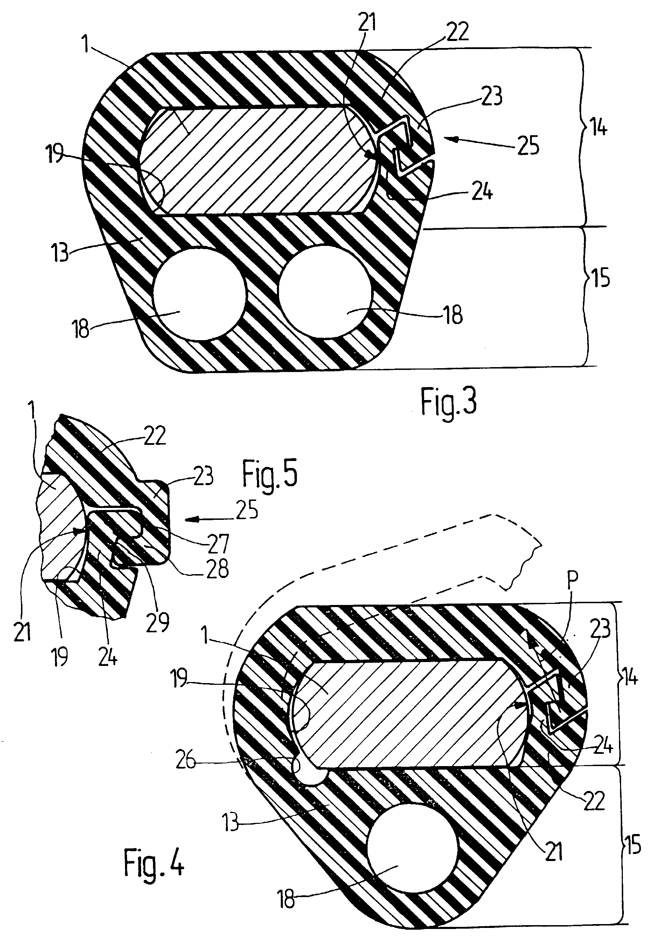

Der in Figur 3 gezeigte Querschnitt entlang der Linie III - III in Figur 1 ist vergrößert dargestellt, damit Einzelheiten der Einheit 13 besser ersichtlich sind. Die Einheit 13 ist einstückig aus weichelastischem, gummiartigem Kunststoff hergestellt und beinhaltet einen Kanal 19 zur Aufnahme der Wischstange 1 sowie zwei Flüssigkeitskanäle 18. Da heutzutage Wischarme für Kraftfahrzeuge bevorzugt mattschwarz gefärbt sind, ist natürlich auch die Einheit 13 schwarz eingefärbt.

Die in Figur 3 rechte Schmalseite 21 der Wischstange 1 zeigt nach unten, wenn sich die Scheibenwischer am Fahrzeug in Parkstellung am unteren Scheibenrand befinden. Die an dieser Schmalseite 21 befindliche Wand 22 der Einheit 13 ist in Längsrichtung der Wischstange 1 bzw. der Einheit 13 geteilt, und die gegenüberliegenden Teile 23, 24 der Wand 22 bilden einen Verschluß 25. Dazu sind die Teile 23 und 24 der Wand 22 mit spiegelbildlichen, hakenförmigen Querschnittsformen ausgestattet, die formschlüssig ineinandergreifen. Aus Figur 3 ist außerdem ersichtlich, daß die Einheit 13 ein einfach zu handhabendes kompaktes Bauteil ist, das glatte und harmonische Außenflächen hat, wodurch es aerodynamisch und ästhetisch günstige Wirkungen erbringen kann. Der Verschluß 25 ist harmonisch in die Querschnittsform der Einheit 13 einbezogen, so daß er nicht störend in Erscheinung tritt.

In Figur 4 ist ein ähnliches Ausführungsbeispiel wie in Figur 3 gezeigt. Es unterscheidet sich dadurch, daß die Einheit 13 nur einen Flüssigkeitskanal 18 aufweist, wodurch sich der Querschnitt der Einheit 13 in Figur 4 nach unten kontinuierlich verjüngt. Die Außenseiten der Einheit 13 sind stärker zueinander geneigt. Mit gestrichelten Linien ist die Gestalt des Querschnitts der Einheit 13 bei geöffnetem Verschluß 25 dargestellt. Diese Gestalt entspricht der, in welcher die Einheit 13 durch Extrudieren hergestellt ist. Damit ist der obere Teile 23 gegenüber dem unteren Teil 24 der Wand 22 mit einer Vorspannung in Richtung des Pfeiles P ausgestattet, die für eine sichere formschlüssige Verbindung der Teile 23 und 24 sorgt. Um die Elastizität und die Beweglichkeit des oberen Teiles der Einheit 13 für deren Montage auf der Wischstange 1 zu verbessern, ist an der linken unteren Innenkante des Kanales 19 eine Rille 26 in die Wand der Einheit 13 eingebracht, welche in diesem Bereich die Wandstärke verringert.

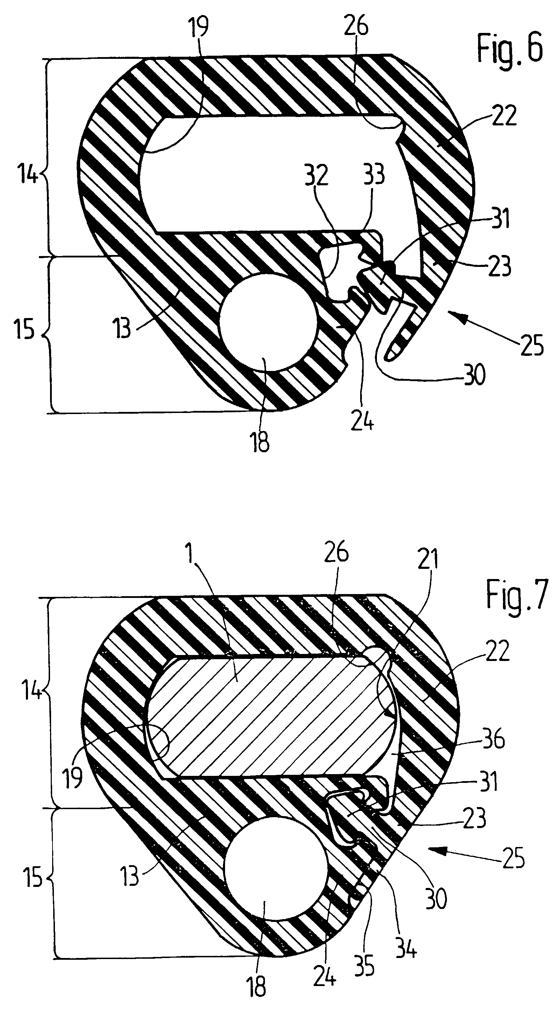

Aus Figur 5 ist eine alternative Möglichkeit für die Ausbildung des Verschlusses 25 ersichtlich. Der Teil 23 der Wand 22 ist im Querschnitt U-förmig gestaltet, wobei die Öffnung des U-förmigen Querschnittes auf die Schmalseite 21 der Wischstange 1 gerichtet ist. Im Bereich des Verbindungssteges 27 des U-förmigen Querschnitts steht der Teil 23 der Wand 22 nach außen ab. Der freie Schenkel 28 des U-förmigen Querschnitts greift hakenartig in eine Nut 29 im unteren Teil 24 der Wand 22 ein und bildet so die formschlüssige Verbindung, welche den Verschluß 25 bildet.

In Figur 6 ist eine andere Ausführung einer durch Extrudieren hergestellten Einheit 13 im geöffneten Zustand der geteilten Wand 22 dargestellt. Diese Ausführung hat nur einen Flüssigkeitskanal 18 und annähernd die Gestalt wie die Einheit 13 in Figur 4. An dem Teil 23 der Wand 22 ist über einen schmalen Steg 30 eine im Querschnitt annähernd herzförmigen Rastleiste 31 einstückig angeformt. Die Rastleiste 31 ist mit ihrer Spitze voran an die offene Seite einer entsprechenden in den Teil 24 eingebrachten im Querschnitt ebenfalls annähernd herzförmigen Rastnut 32 angesetzt. Das entspricht der Stellung am Beginn des Einpressens des Raststeges 31 in die Rastnut 32 zum Verschließen des Kanals 19. Beim Einpressen sowie beim Herauslösen der Rastnut 31 in die bzw. aus der Rastnut 32 muß die Öffnung der Rastnut 32 aufgespreizt werden. Das wird im wesentlichen durch den elastischen Steg 33 an der Oberseite der Rastnut 32 gewährleistet. An der rechten oberen Innenkante des Kanales 19 ist wiederum zur Verbesserung der Beweglichkeit der Wand 22 eine Rille 26 eingebracht. Im geschlossenen Zustand des Verschlusses 25 ist der lappenartige Fortsatz 34 des Teiles 23 in einer entsprechenden Ausnehmung 35 im Teil 24 versenkt, so daß die Außenseiten des Verschlusses 25 miteinander fluchten. Die hier gezeigte Art des rastenden Verschlusses 25 ist einerseits einfach zu handhaben und andererseits sicherer gegen ungewolltes bzw. selbsttätiges Öffnen bei vorhandenen inneren Spannungszuständen. Deshalb ist diese Ausführung der Einheit 13 für gebogene Wischstangen besser geeignet.

In Figur 7 ist die Einheit 13 aus Figur 6 in an eine Wischstange 1 montiertem Zustand gezeigt, wobei auch die Beschreibung von Figur 6 im wesentlichen zutrifft. Zusätzlich ist ein Freiraum 36 zwischen der Wischstange 1 und der Innenseite des Kanales 19 ersichtlich, welcher eine Auslenkung des Steges 33 für das Öffnen der Rastverbindung und damit des Verschlusses 25 erlaubt.

## Patentansprüche

1. Wischarm, insbesondere für Kraftfahrzeuge, mit einer Wischstange (1), an deren freiem Ende ein Wischblatt anlenkbar ist, und die zumindest auf einem großen Teil ihrer Länge eine Umhüllung (14) trägt, welche als einstückige Einheit (13) aus weichelastischem Kunststoff hergestellt ist und einen oder mehrere Flüssigkeitskanäle (18) zur Versorgung einer an der Wischstange (1) oder am Wischblatt oder am Verbindungsstück von Wischarm und Wischblatt befestigten Waschdüse (6) sowie einen Kanal (19) mit entsprechendem Querschnitt zur Aufnahme der Wischstange (1) aufweist, wobei eine Wand (22) des Kanales (19) mit entsprechendem Querschnitt zur Aufnahme der Wischstange (1) über die gesamte Länge der Einheit (13) geteilt ist, dadurch **gekennzeichnet,** daß die gegenüberliegenden Teile (23, 24) der Wand (22) als Verschluß (25) in der Art von gegenseitig in Eingriff bringbaren Querschnittsformen ausgebildet sind, wobei die Querschnitte der gegenüberliegenden Teile (23, 24) der Wand (22) als formschlüssig ineinandergreifende Haken ausgebildet sind.

2. Wischarm nach Anspruch 1, dadurch **gekennzeichnet,** daß sich die Einheit (13) aus Umhüllung (14) und als ein oder mehrere Flüssigkeitskanäle (18) ausgebildetem Schlauch (15) nahezu über die gesamte freiliegende Länge der Wischstange (1) erstreckt und daß die Einheit (13) als kompaktes Bauteil mit aerodynamisch und/oder ästhetisch günstiger Form gestaltet ist.

3. Wischarm nach einem der vorhergehenden Ansprüche, dadurch **gekennzeichnet,** daß sich der Verschluß (25) an einer Schmalseite (21) der Wischstange (1) befindet.

4. Wischarm nach einem der vorhergehenden Ansprüche, dadurch **gekennzeichnet,** daß der Teil (23) der Wand (22) einen U-förmigen Querschnitt aufweist, dessen Öffnung auf die Wischstange gerichtet ist und der im Bereich des Verschlusses (25) nach außen absteht, und daß der freie Schenkel (28) dieses U-förmigen Querschnittes in eine an der Außenseite des Teiles (24) der Wand (22) befindliche Nut (29) hakenartig eingreift.

5. Wischarm nach einem der vorhergehenden Ansprüche, dadurch **gekennzeichnet,** daß der Verschluß (25) anstelle von hakenförmigen Querschnitten der gegenüberliegenden Teile (23, 24) der Wand (22) nunmehr von einer an den einen Teil (23) der geteilten Wand (22) angeformten Rastleiste (31) und einer in den anderen Teil (24) der geteilten Wand (22) eingeformten zugehörigen Rastnut (32) gebildet wird, wobei die Querschnitte von Rastleiste (31) und Rastnut (32) eine korrespondierende herzähnliche Form aufweisen.

6. Wischarm nach einem der vorhergehenden Ansprüche, dadurch **gekennzeichnet,** daß zumindest eines der beiden Teile (23, 24) der geteilten Wand (22) mit einer Vorspannung in Richtung des gegenseitigen Eingriffs der den Verschluß (25) bildenden Querschnittsformen versehen ist.

7. Wischarm nach einem der vorhergehenden Ansprüche, dadurch **gekennzeichnet,** daß der Querschnitt der Wand des Kanales (17) durch eine in Längsrichtung der Einheit (13) verlaufende Nut oder Rille (16) verringert ist.

8. Wischarm nach einem der vorhergehenden Ansprüche, dadurch **gekennzeichnet,** daß die Einheit (13) aus Umhüllung (14) und Schlauch (15) durch Extrudieren hergestellt ist.

## Claims

1. A wiper arm especially for motor vehicles comprising a wiper rod (1) having a free end adapted to pivotably receive a wiper blade, carrying at least on a large portion of its length a jacket (14) manufactured as a unit (13) in one piece made of elastic plastic and having one or more fluid channels (18) for providing a washing nozzle (6) fixed at the wiper rod (1) or at the wiper blade or at the connecting piece between the wiper rod and the wiper blade and having a channel (19) with a corresponding cross-section for accommodating the wiper rod (1) wherein one wall (22) of the channel (19) with its corresponding cross-section is divided over the entire length of unit (13) for accommodating the wiper rod (1), characterized in that the opposing portions (23, 24) of the wall (22) are designed as a closure (25) in the form of mutual engageable cross-sectional shapes, the cross-sections of the opposing portions (23, 24) of the wall (20) are designed as hooks which engage one another form-closed.

2. A wiper arm according to claim 1, characterized in that the unit (13) of the jacket (14) and a hose (15) with one or more fluid channels (18) extends almost over the entire free length of the wiper rod (1) and that the unit is configured as a compact component with an aerodynamically and/or aesthetically advantageous shape.

3. A wiper arm according to one of the preceding claims, characterized in that the closure (25) is located on a narrow side (21) of the wiper rod (1).

4. A wiper arm according to one of the preceding claims, characterized in that the portion (23) of the wall (22) having a U-shaped cross-section which opening is directed to the wiper rod and which extends outwards in the region of the closure (25), and that the free leg (28) of this U-shaped cross-section engages hooklike in a groove (29) located at the outside of the portion (24) of the wall (22).

5. A wiper arm according to one of the preceding claims, characterized in that the closure (25) instead of hooklike cross-sections of the portions (23, 24) of the wall (22) is now formed from a locking strip (31) that is molded onto the one portion (23) of the divided wall (22) and a corresponding locking groove (32) that is molded into the other portion (24) of the divided wall (22), and the cross-sections of locking strip (31) and locking groove (32) have a corresponding heart-like shape.

6. A wiper arm according to one of the preceding claims, characterized in that at least one of the two portions (23, 24) of the divided wall (22) is prestressed in the direction of the mutual engagement of the cross-sectional shape that forms the closure (25).

7. A wiper arm according to one of the preceding claims, characterized in that the cross-section of the wall (22) of the channel (17) has a groove or chamfer (16) that runs in the longitudinal direction of unit (13).

8. A wiper arm according to one of the preceding claims, characterized in that the unit (13) formed by the jacket (14) and hose (15) is extruded.

## Revendications

1. Bras d'essuie-glace, en particulier pour véhicules automobiles, muni d'une tige d'essuieglace (1) sur l'extrémité libre de laquelle peut être articulée une raclette d'essuie-glace, et qui supporte au moins sur une grande partie de sa longueur une enveloppe (14), laquelle se présente sous la forme d'une unité monobloc (13) fabriquée en matière plastique souple et élastique et présente un ou plusieurs canaux à liquide (18) afin d'alimenter une buse de lavage (6) fixée sur la tige d'essuie-glace (1) ou sur la raclette d'essuie-glace ou sur la pièce de raccordement du bras d'essuie-glace et de la raclette d'essuie-glace, de même qu'un canal (19) avec une section transversale correspondante pour réceptionner la tige d'essuie-glace (1), une paroi (22) du canal (19) avec une section transversale correspondante pour réceptionner la tige d'essuie-glace (1) étant divisée sur toute la longueur de l'unité (13), caractérisé en ce que les parties opposées (23, 24) de la paroi (22) sont formées comme une fermeture (25) à la manière de formes à sections transversales susceptibles d'être mises en prise mutuellement, les sections transversales des parties opposées (23, 24) de la paroi (22) étant formées comme des crochets venant en prise les uns dans les autres avec épousement de formes.

2. Bras d'essuie-glace selon la revendication 1, caractérisé en ce que l'unité (13), constituée par l'enveloppe (14) et un tuyau flexible (15) façonné sous la forme d'un ou plusieurs canaux à liquide (18), s'étend sur presque toute la longueur découverte de la tige d'essuie-glace (1) et en se que l'unité (13) est façonnée comme un composant compact de forme améliorée du point de vue aérodynamique et/ou esthétique.

3. Bras d'essuie-glace selon l'une quelconque des revendications précédentes, caractérisé en ce que la fermeture (25) se trouve sur un côté étroit (21) de la tige d'essuie-glace (1).

4. Bras d'essuie-glace selon l'une quelconque des revendications précédentes, caractérisé en ce que la partie (23) de la paroi (22) présente une section transversale en forme de U, dont l'ouverture est tournée vers la tige d'essuie-glace et qui se dresse vers l'extérieur dans la zone de la fermeture (25), et en ce que le bras libre (28) de cette section transversale en forme de U vient en prise à la manière d'un crochet dans une gorge ménagée sur le côté extérieur de la partie (24) de la paroi (22).

5. Bras d'essuie-glace selon l'une quelconque des revendications précédentes, caractérisé en ce que la fermeture (25) est maintenant formée, non pas par des sections transversales en forme de crochets des parties opposées (23, 24) de la paroi (22), mais par une baguette d'encliquetage (31) formulée sur une première partie (23) de la paroi divisée (22) et d'une gorge d'encliquetage (32) associée formée d'un seul tenant dans l'autre partie (24) de la paroi divisée (22), les sections transversales de la baguette d'encliquetage (31) et de la gorge d'encliquetage (32) présentant à peu près une forme de coeur correspondante.

6. Bras d'essuie-glace selon l'une quelconque des revendications précédentes, caractérisé en ce que au moins une des deux parties (23, 24) de la paroi divisée (22) est munie d'une précontrainte en direction de la mise en prise réciproque des formes à sections transversales constituant la fermeture (25).

7. Bras d'essuie-glace selon l'une quelconque des revendications précédentes, caractérisé en ce que la section transversale de la paroi du canal (17) est rétrécie par une gorge ou cannelure (26) s'étendant dans le sens de la longueur de l'unité (13).

8. Bras d'essuie-glace selon l'une quelconque des revendications précédentes, caractérisé en ce que l'unité (13), constituée par l'enveloppe (14) et le tuyau flexible (15), est fabriquée par extrusion.
